(19) 

Europäisches
Patentamt

European
Patent Office

Office européen
des brevets

(11) **EP 2 791 492 B1**

(12) **EUROPEAN PATENT SPECIFICATION**

(45) Date of publication and mention
of the grant of the patent:
**26.09.2018 Bulletin 2018/39**

(21) Application number: **12858259.0**

(22) Date of filing: **10.12.2012**

(51) Int Cl.:
**B60W 30/188** (2012.01)     **F02D 31/00** (2006.01)
**F02D 41/02** (2006.01)     **F02D 41/04** (2006.01)

(86) International application number:
**PCT/SE2012/051361**

(87) International publication number:
**WO 2013/089618 (20.06.2013 Gazette 2013/25)**

(54) **DEVICE AND METHOD FOR REGULATING THE SPEED OF AN ENGINE IN RESPONSE TO EXTRA LOAD**

VORRICHTUNG UND VERFAHREN ZUR REGELUNG DER DREHZAHL EINES MOTORS JE NACH EINER ZUSÄTZLICHEN LAST

DISPOSITIF ET PROCÉDÉ POUR RÉGULER LA VITESSE D'UN MOTEUR EN RÉPONSE À UNE CHARGE SUPPLÉMENTAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.12.2011 SE 1151186**

(43) Date of publication of application:
**22.10.2014 Bulletin 2014/43**

(73) Proprietor: **Scania CV AB**
**151 87 Södertälje (SE)**

(72) Inventor: **SUNDHOLM, Per**
**S-155 30 Nykvarn (SE)**

(74) Representative: **Scania CV AB**
**Patents, GP 117kv**
**151 87 Södertälje (SE)**

(56) References cited:
**EP-A1- 1 544 440      EP-A2- 0 270 313**
**DE-A1- 10 326 935      DE-A1-102007 004 171**
**FR-A1- 2 844 553      JP-A- 2004 245 191**
**US-A- 6 135 918      US-A1- 2004 011 328**
**US-A1- 2005 154 524      US-A1- 2010 138 118**
**US-B1- 6 196 188      US-B1- 6 289 873**

**Description**

TECHNICAL FIELD

The present invention relates to a method for regulating the speed of an engine in response to extra load. The invention relates also to a computer programme product comprising programme code for a computer for implementing a method according to the invention. The invention relates also to a device for regulating the speed of an engine in response to extra load, and to a motor vehicle equipped with the device.

BACKGROUND

In today's vehicles an accelerator pedal may be provided to regulate a torque of the vehicle's engine either directly or via engine speed demand and regulator. On vehicles equipped with a manual gearbox the accelerator pedal may be controlled relative to engine speed, whereas on other vehicles it may be controlled relative to torque. A reference speed for a speed-controlled accelerator pedal thus depends both on accelerator pedal position and on engine torque to increase the resolution of such a system. When setting in motion from standstill a vehicle equipped with a clutch pedal, or when the gearbox is in a neutral state, the driver may use the accelerator pedal to demand an engine speed which depends solely on the accelerator pedal position. In other situations, i.e. in so-called ordinary running, the setting of the accelerator pedal is optimised for high resolution. In a situation where the running resistance increases, or the load upon the engine increases upon activation of a power takeoff, and regulation is by means of the accelerator pedal, the driver has to depress the accelerator pedal in order to try to keep the engine speed constant.

When there are rapid changes in the load upon the engine, it may be difficult for the driver to regulate its speed by means of the accelerator pedal. In one example such a situation may occur when tilting a platform of the vehicle while moving at inching speed, particularly if the vehicle is equipped with an automatic gearbox.

When there is extra load upon an engine of a motor vehicle, it may be difficult for the driver to compensate for a decrease in prevailing engine speed. Said extra load upon the engine may be caused by power offtake from the engine to run vehicle equipment items, e.g. a tipper platform, snow plough, grass mowing unit etc. EP1544440 A1 describes an example of controlling the engine speed of a travelling construction vehicle.

SUMMARY OF THE INVENTION

There is need for a method and a device whereby a driver of a motor vehicle can have appropriate assistance to maintain desired engine speed when there is extra load upon the engine.

An object of the present invention is to propose a novel and advantageous method for regulating the speed of an engine in response to extra load. Another object of the invention is to propose a novel and advantageous method and a novel and advantageous computer programme for regulating the speed of an engine in response to extra load.

A further object of the invention is to propose a method, a device and a computer programme for achieving improved performance of a motor vehicle during dynamic processes, e.g. when there is variable load upon its engine.

A further object of the invention is to propose a method, a device and a computer programme for achieving improved running characteristics of a vehicle when there is extra load upon its engine.

These objects are achieved with a method for regulating the speed of an engine in response to extra load according to claim 1, a device according to claim 7, and a computer programme performing the method.

One aspect of the invention is a proposed method for regulating the speed of an engine in response to extra load, comprising the step of

- continuously determining a prevailing speed of said engine.

The method comprises also the steps of

- determining, upon activation of extra load, a maximum permissible engine speed set-point value and a corresponding power mobilisation reference for the regulation of said speed,
- regulating said speed towards said maximum permissible set-point value when more power is being mobilised than said power mobilisation reference, and
- regulating said speed according to a specific relationship between engine speed set-point value and power mobilisation when less power is being mobilised than said power mobilisation reference.

The result is a robust method for maintaining a higher engine speed when there is extra load upon the vehicle's engine. As said extra load may be quite unpredictable by a driver, an automatic method is thus proposed for regulation of engine speed upon activation of extra load according to an aspect of the invention.

The method may further comprise the step of

- determining said relationship as a function of the engine's idling speed and said engine speed set-point value. Said relationship may be any suitable relationship. The result is a versatile method which is adaptable to each individual vehicle.

The method may further comprise the step of

- determining said relationship as a straight line. The result is a method which requires little computing capacity for regulating the engine's speed when power being mobilised is below said power mobilisation reference. Effective and precise regulation of engine speed is thus achievable.

Said activation of extra load may be effected manually by an operator. This is a simple way of activating the innovative regulation whereby regulation of engine speed according to the invention may be initiated at an early stage, i.e. before it decreases to an undesirable level.

The method may further comprise the step of

- automatically ceasing said regulation when no power is being mobilised, said regulation has taken place over a predetermined amount of time and said activation of extra load has been deactivated.

The method further comprise the step of

- ceasing said regulation when power being mobilised substantially exceeds said power mobilisation reference, said regulation has taken place over a predetermined amount of time and said activation of extra load has been deactivated.

The method may alternatively comprise the step of

- ceasing said regulation when any suitable control unit of the vehicle demands a torque set-point value which exceeds the torque set-point value of said regulation, said regulation has taken place over a predetermined amount of time and said activation of extra load has been deactivated.

The method may alternatively comprise the step of

- ceasing said regulation when any suitable control algorithm of a control unit of the vehicle demands a torque set-point value which exceeds the torque set-point value of said regulation, said regulation has taken place over a predetermined amount of time and said activation of extra load has been deactivated.

An alternative disconnection mechanism for the innovative regulation of engine speed in response to extra load is thus achieved. A reliable way of disconnecting the innovative regulation is also achieved. A user-friendly method is also achieved in that a driver need only deactivate the extra load and depress the accelerator pedal temporarily in order to activate control routines for the vehicle's ordinary running.

The method may further comprise the step of

- increasing said engine speed set-point value when power mobilisation which exceeds said power mobilisation reference has been demanded over a predetermined amount of time. If the engine speed is greater than a maximum permissible set-point value n_RefMax, said regulation cannot in an acceptable way intercept a decreasing engine speed.

The method is easy to implement in existing motor vehicles. Software for regulating the speed of an engine in response to extra load according to the invention may be installed in a control unit of the vehicle during the manufacture of the vehicle. A purchaser of the vehicle may thus have the possibility of selecting the function of the method as an option. Alternatively, software which comprises programme code for conducting the innovative method for regulating the speed of an engine in response to extra load may be installed in a control unit of the vehicle on the occasion of upgrading at a service station, in which case the software may be loaded into a memory in the control unit. Implementing the innovative method is therefore cost-effective, particularly since no further components need be installed in the vehicle according to an aspect of the invention. Relevant hardware is currently already provided in the vehicle. The invention therefore represents a cost-effective solution to the problems indicated above.

Software which comprises programme code for regulating the speed of an engine in response to extra load is easy to update or replace. Moreover, various parts of the software which comprises programme code for regulating the speed of an engine in response to extra load may be replaced independently of one another. This modular configuration is advantageous from a maintenance perspective.

One aspect of the invention is a proposed device for regulating the speed of an engine in response to extra load, comprising

- means for continuously determining a prevailing speed of said engine,
- means for determining, upon activation of extra load, a maximum permissible engine speed set-point value and a corresponding power mobilisation reference for the regulation of said speed,
- means for regulating said speed towards said maximum permissible set-point value when more power is being mobilised than said power mobilisation reference, and
- means for regulating said speed according to a specific relationship between engine speed set-point value and power mobilisation when less power is being mobilised than said power mobilisation reference.

The device may further comprise

- means for determining said relationship as a function of the engine's idling speed and said speed set-point value.

The device may further comprise

- means for determining said relationship as a straight line.

The device may further comprise means for manually activating said extra load.

The device may further comprise

- means for automatically ceasing said regulation when no power is being mobilised, said regulation has taken place over a predetermined amount of time and said activation of extra load has been deactivated.

The device further comprise

- means for ceasing said regulation when power being mobilised substantially exceeds said power mobilisation reference, said regulation has taken place over a predetermined amount of time and said activation of extra load has been deactivated.

The device may alternatively comprise

- means for ceasing said regulation when any suitable control unit of the vehicle demands a torque set-point value which exceeds the torque set-point value of said regulation, said regulation has taken place over a predetermined amount of time and said activation of extra load has been deactivated.

The device may alternatively comprise

- means for ceasing said regulation when any suitable control algorithm of a control unit of the vehicle demands a torque set-point value which exceeds the torque set-point value of said regulation, said regulation has taken place over a predetermined amount of time and said activation of extra load has been deactivated.

The device may further comprise

- means for increasing said engine speed set-point value when power mobilisation which exceeds said power mobilisation reference has been demanded over a predetermined amount of time.

The above objects are also achieved with a motor vehicle which is provided with the device. The vehicle may be a truck, bus or car.

An aspect of the invention is a proposed computer programme for regulating the speed of an engine in response to extra load, which programme comprises programme code stored on a computer-readable medium for causing an electronic control unit or another computer connected to the electronic control unit to perform steps according to any one of claims 1-6.

An aspect of the invention is a proposed computer programme for regulating the speed of an engine in response to extra load, which programme comprises programme code stored on a medium for causing an electronic control unit or another computer connected to the electronic control unit to perform steps according to any one of claims 1-6.

An aspect of the invention is a proposed computer programme product comprising a programme code stored on a computer-readable medium for performing method steps according to any one of claims 1-6 when said computer programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not confined to the specific details described. One skilled in the art having access to the teachings herein will recognise further applications, modifications and incorporations within other fields, which are within the scope of the invention.

BRIEF DESCRIPTION OF THE DRAWINGS

For fuller understanding of the present invention and its further objects and advantages, the detailed description set out below should be read in conjunction with the accompanying drawings, in which the same reference notations pertain to similar items in the various diagrams and

Figure 1 schematically illustrates a vehicle according to an embodiment of the invention,
Figure 2 schematically illustrates a subsystem for the vehicle depicted in

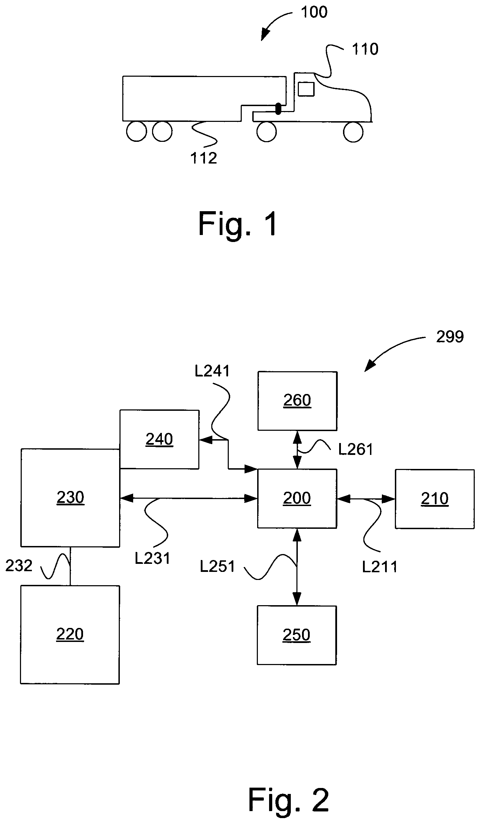

Figure 1, according to an embodiment of the invention,

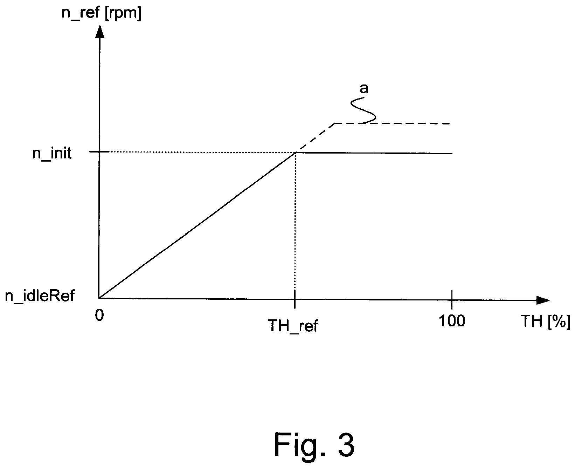

Figure 3 schematically illustrates a relationship between two parameters according to an embodiment of the invention,

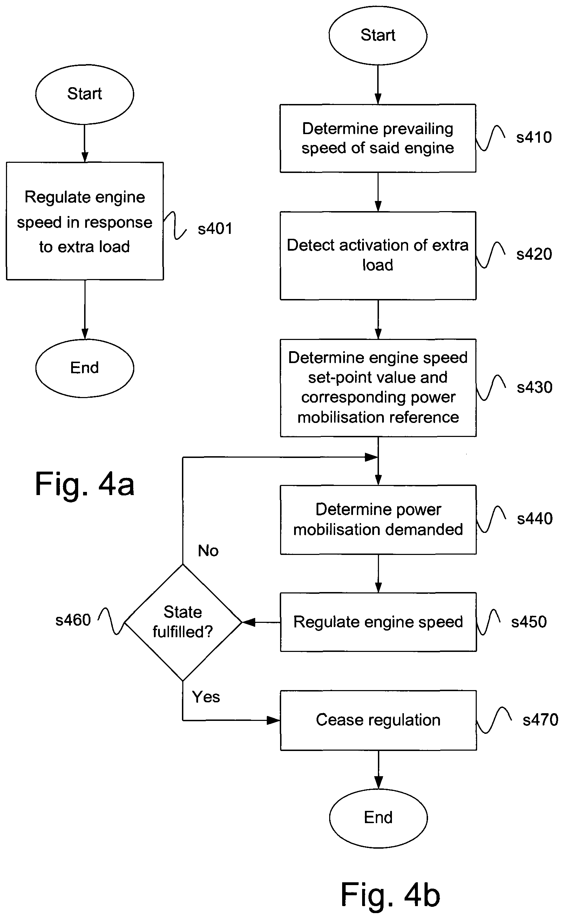

Figure 4a is a schematic flowchart of a method according to an embodiment of the invention,
Figure 4b is a more detailed schematic flowchart of a method according to an embodiment of the invention, and

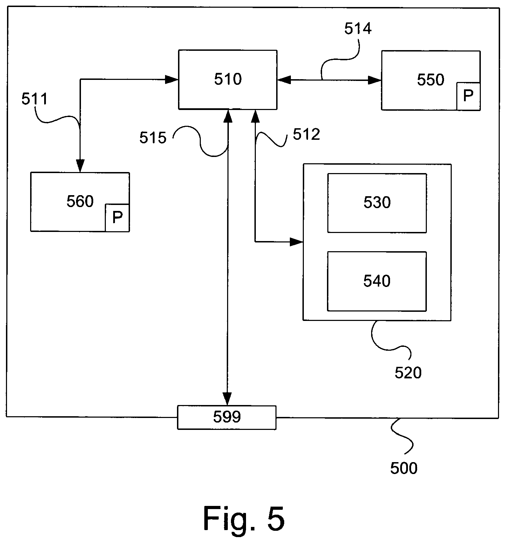

Figure 5 schematically illustrates a computer according to an embodiment of the invention.

DETAILED DESCRIPTION OF THE DRAWINGS

Figure 1 depicts a side view of a vehicle 100. The vehicle here exemplified comprises a tractor unit 110 and a trailer 112. It may be a heavy vehicle, e.g. a truck or a bus. It may alternatively be a car.

The term "link" refers herein to a communication link which may be a physical connection such as an opto-electronic communication line, or a non-physical connection such as a wireless connection, e.g. a radio link or microwave link.

Figure 2 depicts a subsystem 299 of the vehicle 100. This subsystem is situated in the tractor unit 110 and comprises an engine 230 which is arranged to convey propulsive force to at least one pair of tractive wheels (not depicted) by means of a transmission (not depicted).

The subsystem 299 comprises a first control unit 200 adapted to controlling the operation of the engine 230 according to stored running routines. This first control unit is arranged for communication with the engine via a link L231.

The engine 230 is provided with a speed sensor 240 which is fitted in a conventional way, arranged for communication with the first control unit 200 via a link L241 and adapted to continuously determining a prevailing speed n of the engine. This sensor is adapted to continuously sending signals S1 which contain information about said prevailing engine speed n determined to the first control unit via the link L241.

The engine 230 is also fitted with at least one power takeoff 232 which may be adapted to running a power unit 220 by means of torque generated by the engine. One example of such a power takeoff and power unit might be a pneumatic system and a compressed air unit respectively. Another example might be a hydraulic system and a tipper platform respectively.

Said power takeoff 232 may be any suitable power takeoff. Said power unit 200 may be any suitable power unit. Said power takeoff and power unit are adapted to being run by means of torque from the engine. Activation and running of said power takeoff and power unit has the effect of reducing a prevailing speed of the engine.

Said power takeoff 232 and associated power unit 220 may alternatively be fitted to any suitable component of the vehicle's power train, e.g. a gearbox.

An acceleration control 250 is provided in a cab of the vehicle 100 in a conventional way and is signal-connected to the first control unit 200 via a link L251. It may take the form of an accelerator pedal and is adapted to continuously detecting power mobilisation demanded by a driver. Said power mobilisation may correspond to a torque T. The acceleration control 250 is adapted to continuously sending signals S2 which contain information about said torque T demanded by the driver from the engine 230. Said torque demanded may be indicated as an acceleration control position TH in the form of a percentage (%).

In a first example where the driver does not depress the accelerator pedal, a signal S2 containing information corresponding to the acceleration control position TH=zero (0) % is communicated.

In a second example where the driver keeps the accelerator pedal half depressed, a signal S2 containing information corresponding to the acceleration control position TH=50% is communicated.

In a third example where the driver keeps the accelerator pedal fully depressed, a signal S2 containing information corresponding to the acceleration control position TH=100% is communicated.

The first control unit 200 comprises an engine speed regulator (not depicted). which may be a so-called PID regulator and may be implemented as stored software with suitable routines. The first control unit is adapted to guiding a speed of the engine 230 towards a setpoint value n_ref.

A selector device 260 is provided for communication with the first control unit 200 via a link L261. A driver or operator of the vehicle may use this selector to manually activate and control the power takeoff 232 and the power unit 220.

In one example said selector device 260 may be a push-button by means of which extra load can activated and deactivated. In one example it may be a lever which can be used to activate and deactivate extra load. Said lever may also be used to control the power takeoff 232 and the power unit 220. In one example said lever is adapted to controlling the operation of a tipper platform.

Said selector device 260 is adapted to sending signals S3 to the first control unit 200 which contain information that activation or deactivation of extra load has been effected. The first control unit is adapted to detecting activation and deactivation of said extra load. Said selector device is adapted to sending signals S3 to the first control unit which contain control commands for running said power takeoff 232 and power unit 220.

The first control unit 200 is adapted in one version to using the signals S1, S2 and S3 received which contain said information as a basis for controlling the operation of the engine 230, e.g. by regulating its speed according to an aspect of the invention.

The first control unit 200 is adapted in one version to continuously determining a prevailing speed n of the engine 230. This may be done on the basis of information sent from the speed sensor 240. The first control unit is adapted in one version to continuously determining whether extra load has been activated by a driver/operator. It is adapted in one version to continuously determining whether extra load has been deactivated by a driver/operator. It is adapted in one version to responding to activation of extra load by determining a maximum permissible engine speed set-point value n_init and a corresponding power mobilisation reference TH_ref for the regulation of said speed n. It is adapted in one version to regulating said speed n towards said maximum permissible set-point value n_init when more power is being mobilised than said power mobilisation reference TH_ref. It is adapted in one version to regulating said speed according to a specific relationship between engine speed set-point value and power mobilisation when less power is being mobilised than said power mobilisation reference TH_ref. It is adapted in one version to determining said relationship as a function of the engine's idling speed n_idleRef and said speed set-point value n_ref. It is adapted in one version to determining said relationship as a straight line. It is adapted in one version to automatically ceasing said regulation when there is no power mobilisation TH. It is adapted in one version to ceasing said regulation when there is power mobilisation TH which substantially exceeds said power mobilisation reference TH_ref, said regulation has taken place over a predetermined amount of time and said activation of extra load has been deactivated.

The first control unit 200 is adapted in one version to ceasing said regulation when any suitable control unit of the vehicle demands a torque set-point value which exceeds the torque set-point value of said regulation, said regulation has taken place over a predetermined amount of time and said activation of extra load has been deactivated.

The first control unit 200 is adapted in one version to ceasing said regulation when any suitable control algorithm of a control unit of the vehicle demands a torque set-point value which exceeds the torque set-point value of said regulation, said regulation has taken place over a predetermined amount of time and said activation of extra load has been deactivated.

A second control unit 210 is arranged for communication with the first control unit 200 via a link L211. This second control unit may be detachably connected to the first control unit. It may be a control unit external to the vehicle. It may be adapted to effecting the innovative method steps according to the invention. It may be used to cross-load software to the first control unit, particularly software for conducting the innovative method. It may alternatively be arranged for communication with the first control unit via an internal network on board the vehicle. It may be adapted to performing functions substantially similar to the first control unit, e.g. determining, upon activation of extra load, the engine speed set-point value n_init and a corresponding power mobilisation reference TH_ref for the regulation of the engine's speed n,

- regulating said speed n towards said maximum permissible set-point value n_init when more power is being mobilised than said power mobilisation reference TH_ref, and
- regulating said speed according to a specific relationship between engine speed set-point value and power mobilisation when less power is being mobilised than said power mobilisation reference TH_ref.

Figure 3 illustrates schematically a relationship between an engine speed set-point value n_ref [rpm] and acceleration control position TH [%] according to an aspect of the invention.

In one embodiment the first control unit 200 is adapted to determining whether manual activation of extra load has been effected.

When said activation of extra load is detected, an initial engine speed value n_init is determined. This initial speed value may be somewhat lower than a value prevailing just before said activation. Alternatively it may correspond to the value which was prevailing when said activation was effected. In one version this initial speed value is determined immediately after said activation has been detected, in which case it may be set to correspond to a prevailing speed n when said activation was effected.

A number of conditions for regulating the engine 230 in response to extra load are thus determined according to an aspect of the invention.

In cases where the acceleration control is depressed, i.e. where TH differs from zero (0), and detection of activation of extra load has taken place, the function for engine speed regulation is determined as follows:

1) A constant k is determined as

$$k= (n\_init-n\_offset-n\_idleRef)/TH\_ref$$

2) A constant m is determined as

$$m= n\_idleRef$$

3)

$$n\_refMax=n\_init-n\_offset$$

in which

TH_ref is an acceleration control position which prevails at a time when n_init is determined,
n_init is a value corresponding to a prevailing engine speed at the time of initiation of said regulation,
n_offset is an offset related to the engine's speed;
n_idleRef is a predetermined reference value for the engine's idling speed;
n_refMax is a maximum permissible reference value for the engine's speed n for said regulation,
k is a constant and m is a constant which define the straight line equation as n_ref(TH)=k*TH+m.

Thus the function for engine speed regulation on the basis of acceleration control position TH may also be called f, in other words f= n_ref(TH)=k*TH+m.

A state in which regulation of the engine's speed takes place according to some aspect of the invention in response to extra load is referred to as an active state of the regulating function. A state in which regulation of the engine's speed does not take place according to some aspect of the invention in response to extra load is referred to as a non-active state of the regulating function.

Figure 3 illustrates schematically a relationship between engine speed set-point value n_ref and acceleration control position TH during regulation of the engine in response to extra load according to an aspect of the invention.

An acceleration control position TH_ref is determined by means of the first control unit 200 to correspond to a value associated with the initial engine speed n_init determined, i.e. at a time when n_init is determined said control unit 200 will also determine a corresponding acceleration control position TH_ref.

It may be seen in Figure 3 that regulation of the engine's speed n takes place towards said speed set-point value n_init when there is more power mobilisation TH than said power mobilisation reference TH_ref, regulation of the engine's speed n takes place according to a specific relationship f between engine speed set-point value n_ref and power mobilisation TH and less power is being mobilised than said power mobilisation reference TH_ref.

In one aspect of the invention said maximum permissible reference value n_refMax for the engine's speed n is set initially to correspond to n_init.

In one aspect of the invention said initially set maximum permissible reference value n_refMax for the engine's speed n may be increased when power mobilisation which exceeds said power mobilisation reference TH_ref has been demanded over a predetermined amount of time. This is represented schematically by graph a.

In one aspect of the invention said speed set-point value n_init may thus be increased when power mobilisation which exceeds said power mobilisation reference TH_ref has been demanded over a predetermined amount of time.

In this example, graph a represents both said initially set maximum permissible reference value n_refMax and said set-point value n_init.

Said relationship between engine speed set-point value and acceleration control position is herein described as being defined as a straight line. It is of course possible for n_ref to be defined as any suitable function of acceleration control position, e.g. an exponential, logarithmic or polygonal function. Said function f may be a sine or cosine function. It is herein to be understood that said any suitable function f is defined within a range [0, TH_ref] %. Thus n_refMax is defined within a range [TH_ref, 100] %.

In one embodiment said maximum permissible reference value n_refMax for the engine's speed n may be ramped down according to a predetermined model in cases where n_ref corresponds to a value which is below said value for n_refMax over a predetermined period of time deltaT. Said predetermined time deltaT may be any suitable period, e.g. 0.5 second or 2 seconds.

In one embodiment said maximum permissible reference value n_refMax for the engine's speed n can never exceed said speed value n_init.

In one embodiment said maximum permissible reference value n_refMax for the engine's speed n may be raised where appropriate, in which case it may exceed said speed value n-init.

In response to extra load upon an engine, the innovative regulation will be effected as herein described, viz. on the basis of acceleration control position according to said function f and said maximum permissible reference value n_refMax for the engine's speed n, subject to certain conditions. Disconnection of said regulation takes place in one version as described below.

Disconnection of an active state of the regulating function may take place when the acceleration control is no longer pressed in, i.e. when TH=0%.

Alternatively, disconnection of an active state of the regulating function may take place when the acceleration control exceeds TH_init, the regulating function has been active over at least a predetermined period of time (e.g. within the range 0-3 seconds) and activation of extra load has been deactivated.

Figure 4a is a schematic flowchart of a method for regulating the speed of an engine in response to extra load, according to an embodiment of the invention. The method comprises a first step s401 comprising the step of

- continuously determining a prevailing speed of said engine.

Step s401 comprises also the steps of

- determining, upon activation of extra load, a maximum permissible engine speed set-point value and a corresponding power mobilisation reference for regulation of said speed,
- regulating said speed towards said maximum permissible set-point value when more power is being mobilised than said power mobilisation reference, and
- regulating said speed according to a specific relationship between engine speed set-point value and power mobilisation when less power is being mobilised than said power mobilisation reference. The method ends after step s401.

Figure 4b is a schematic flowchart of a method for regulating the speed of an engine in response to extra load, according to an embodiment of the invention.

This method comprises a first step s410 comprising the step of continuously determining a prevailing speed n of said engine 230, which may be done by means of the speed sensor 240. In one version this speed sensor sends raw data detected to the first control unit 200, which is adapted to determining a prevailing speed n of the engine on the basis of said raw data received. Step s410 is followed by a step s420.

Method step s420 comprises the step of detecting activation of an extra load, which may for example be by a driver manually activating the power offtake 232 and the power unit 220 by means of the selector device 260. Said first control unit 200 is adapted to receiving a signal S3 which contains information that an extra load has been activated from said selector device. Said first control unit is thus adapted to detecting activation of the extra load. Step s420 is followed by a step s430.

Method step s430 comprises the step of responding to said detection of activation of the extra load by determining a maximum permissible engine speed set-point value n_init and a corresponding power mobilisation reference for the regulation of said engine speed. Thus n_init and TH_ref are determined. Step s430 comprises also the step of determining the function f in a suitable way. In one example the constants k and m are determined as described above. In another example other constants or parameters for a chosen function f may be determined in order thereby to define the function f in the active state for the regulation of the engine's speed in response to extra load according to an aspect of the invention. Step s430 is followed by a step s440.

Method step s440 comprises the step of determining a power mobilisation demanded. In this case the regulation of a speed n of the engine 230 according to the innovative method is in the active state. Thus regulation of the engine's speed in response to extra load takes place on the basis of power mobilisation which is effected by a driver using the acceleration control 250. Step s440 is followed by a step s450.

Method step s450 comprises the step of regulating said speed n towards the maximum permissible set-point value n_init when more power is being mobilised than said power mobilisation reference TH_ref.

Alternatively, step s450 comprises the step of regulating said speed n towards n_maxRef if this has been ramped down as described above. Method step s450 comprises the step of regulating said speed n according to a specific relationship between engine speed set-point value and power mobilisation when less power is being mobilised than said power mobilisation reference. Step s450 is followed by a step s460.

Method step s460 comprises the step of deciding whether a predetermined state is fulfilled. One example of said predetermined state is when the acceleration control 250 is no longer being pressed in, i.e. when TH=0%. Another example is the acceleration control exceeding TH_ref when the regulating function has been active over at least a predetermined period of time and said activation of extra load has been deactivated. If said predetermined state is fulfilled, a subsequent method step s470 is performed. If not, step s440 is performed again.

Method step s470 comprises the step of ceasing regulation of the engine's speed n when there is extra load. The method ends after step s470.

Figure 5 is a diagram of a version of a device 500. The control units 200 and 210 described with reference to Figure 2 may in one version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for regulating the speed of an engine in response to extra load according to an aspect of the innovative method. The programme comprises routines for continuously determining a prevailing speed n of the engine 230. It comprises routines for detecting manual activation of an extra load upon the engine.

The programme P comprises routines for responding to activation of an extra load by determining a maximum permissible engine speed set-point value n_init and a corresponding power mobilisation reference TH_ref for the regulation of said speed n.

The programme P comprises routines for regulating said speed n towards said maximum permissible set-point value n_init when more power is being mobilised than said power mobilisation reference TH_ref. It comprises routines for regulating said speed according to a specific relationship between engine speed set-point value n_ref and power mobilisation TH when less power is being mobilised than said power mobilisation reference.

The programme P comprises routines for determining said relationship as a function of the engine's idling speed n_idleRef and said set-point value n_ref. It comprises routines for determining said relationship as a straight line.

The programme P comprises routines for automatically ceasing said regulation when no power is being mobilised. It comprises routines for ceasing said regulation when power being mobilised substantially exceeds said power mobilisation reference TH_ref, said regulation has taken place over a predetermined amount of time and said activation of extra load has been deactivated.

The programme P may be stored in an executable form or in compressed form in a memory 560 and/or in a read/write memory 550.

Where it is stated that the data processing unit 510 performs a certain function, it means that it conducts a certain part of the programme which is stored in the memory 560 or a certain part of the programme which is stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is arranged to communicate with the data processing unit via a data bus 514. The links L211, L231, L241 and L251, for example, may be connected to the data port 599 (see Figure 2).

When data are received on the data port 599, they are stored temporarily in the second memory element 540. When input data received have been temporarily stored, the data processing unit 510 will be ready to conduct code execution as described above. In one version, signals received on the data port contain information about a prevailing speed n of the engine 230. In one version, signals received on the data port contain information about an acceleration control position TH. In one version, signals received on the data port contain information about activation of extra load upon the engine. In one version, signals received on the data port contain information about deactivation of extra load upon the engine. The signals received on the data port may be used by the device 500 to control the operation of the engine.

Parts of the methods herein described may be conducted by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive, nor to limit the invention to the variants described. Many modifications and variations will obviously suggest themselves to one skilled in the art. The embodiments have been chosen and described in order best to explain the principles of the invention and their practical applications and thereby make it possible for one skilled in the art to understand the invention for different embodiments and with the various modifications appropriate to the intended use.

**Claims**

1. A method for regulating the speed of an engine (230) in response to extra load, the engine being adapted to run a power take-off which can add an extra load to the engine while conveying propulsive force to at least one pair of tractive wheels by means of a transmission, comprising the step of

    - continuously determining (s410) a prevailing speed (n) of said engine, **characterised by** the steps of
    - determining (s430), upon activation of extra load from the power take-off (s420), a maximum permissible engine speed set-point value (n_init) and a corresponding power mobilisation reference (TH_ref), for the regulation of said speed (n),
    - regulating (s450) said speed (n) towards said maximum permissible set-point value (n_init; n_refMax) when a higher power mobilisation (TH) is demanded from a driver than said power mobilisation reference (TH_ref), and
    - regulating (s450) said speed (n) according to a specific relationship between engine speed set-point value (n_ref) and power mobilisation (TH) when the power mobilisation (TH) demanded from the driver is less than said power mobilisation reference (TH_ref), the method further comprising the step of determining said relationship as a function of the engine's idling speed (n_idleRef).

2. A method according to claim 1, further comprising the step of

    - determining said relationship as a straight line (f).

3. A method according to any one of the foregoing claims, in which said activation of extra load is effected manually by an operator.

4. A method according to any one of the foregoing claims, further comprising the step of

    - after activation of said regulation, automatically ceasing said regulation when there is no power mobilisation (TH), said regulation has taken place over a predetermined amount of time and said activation of extra load has been deactivated.

5. A method according to any one of the foregoing claims, further comprising the step of

    - after activation of said regulation, ceasing (s470) said regulation when there is power mobilisation (TH) which substantially exceeds said power mobilisation reference (TH_ref), said regulation has taken place over a predetermined amount of time and said activation of extra load has been deactivated.

6. A method according to any one of the foregoing claims, further comprising the step of

    - increasing said engine speed set-point value (n_init) when power mobilisation which exceeds said power mobilisation reference (TH_ref) has been demanded over a predetermined amount of time.

**7.** A device for regulating the speed of an engine in response to extra load, the engine being adapted to run a power take-off which can add an extra load to the engine while conveying propulsive force to at least one pair of tractive wheels by means of a transmission, the device comprising:

- means (240; 200; 210; 500) for continuously determining a prevailing speed (n) of said engine,

**characterised by**

- means (200; 210; 500) for determining, upon activation of extra load, a maximum permissible engine speed set-point value (n_init) and a corresponding power mobilisation reference (TH_ref) for the regulation of said speed (n),
- means (200; 210; 500) for regulating said speed (n) towards said maximum permissible set-point value (n_init; n_refMax) when a higher power mobilisation (TH) is demanded from a driver than said power mobilisation reference (TH_ref), and
- means (200; 210; 500) for regulating said speed (n) according to a specific relationship between engine speed set-point value (n_ref) and power mobilisation (TH) when the power mobilisation (TH) demanded from the driver is less than said power mobilisation reference (TH_ref), the device further comprising means (200; 210; 500) for determining said relationship as a function of the engine's idling speed (n_idleRef).

**8.** A device according to claim 7, further comprising

- means (200; 210; 500) for determining said relationship as a straight line (f).

**9.** A device according to any one of claims 7-8, further comprising means for manually activating said extra load.

**10.** A device according to any one of claims 7-9, further comprising

- means (200; 210; 500) for automatically ceasing said regulation when there is no power mobilisation (TH), said regulation has taken place over a predetermined amount of time and said activation of extra load has been deactivated.

**11.** A device according to any one of claims 7-10, further comprising

- means (200; 210; 500) for ceasing said regulation when there is power mobilisation (TH) which substantially exceeds said power mobilisation reference (TH_ref), said regulation has taken place over a predetermined amount of time and said activation of extra load has been deactivated.

**12.** A device according to any one of claims 7-11, further comprising

- means (200; 210; 500) for increasing said engine speed set-point value (n_init) when power mobilisation which exceeds said power mobilisation reference (TH_ref) has been demanded over a predetermined amount of time.

**13.** A motor vehicle (100; 110) provided with a device according to any one of claims 7-12.

**14.** A motor vehicle (100; 110) according to claim 13, which vehicle is any from among truck, bus or car.

**15.** A computer programme (P) for regulating the speed of an engine in response to extra load, which programme (P) comprises programme code stored on a computer-readable medium for causing an electronic control unit (200; 500) or another computer (210; 500) connected to the electronic control unit (200; 500) to perform steps according to any one of claims 1-6.

**16.** A computer programme product comprising a programme code stored on a computer-readable medium for performing method steps according to any one of claims 1-6 when said computer programme is run on an electronic control unit (200; 500) or another computer (210; 500) connected to the electronic control unit (200; 500).

**Patentansprüche**

**1.** Verfahren zum Regulieren der Drehzahl eines Motors (230) in Reaktion auf zusätzliche Last, wobei der Motor dazu eingerichtet ist, einen Nebenantrieb anzutreiben, der dem Motor eine zusätzliche Last hinzufügt, während Antriebskraft auf mindestens ein Paar Antriebsräder durch ein Getriebe übertragen wird, umfassend die Schritte

- kontinuierliches Ermitteln (s410) einer aktuellen Drehzahl (n) des Motors,

**gekennzeichnet durch** die Schritte

- Ermitteln (s430), nach Aktivieren der zusätzlichen Last am Nebenantrieb (s420), eines maximal zulässigen Sollwerts (n_init) der Motordrehzahl und einer entsprechenden Leistungsmobilisierungsreferenz (TH_ref), zum Regulieren der Drehzahl (n),

- Regulieren (s450) der Drehzahl (n) hin zum maximal zulässigen Sollwert (n_init; n_refMax), wenn eine höhere Leistungsmobilisierung (TH) als die Leistungsmobilisierungsreferenz (TH_ref) von einem Fahrer angefordert wird, und

- Regulieren (s450) der Drehzahl (n) entsprechend einer bestimmten Beziehung zwischen Motordrehzahlsollwert (n_ref) und Leistungsmobilisierung (TH), wenn die Leistungsmobilisierung (TH), die vom Fahrer angefordert wird, geringer ist als die Leistungsmobilisierungsreferenz (TH_ref), wobei das Verfahren ferner den Schritt des Ermittelns der Beziehung als eine Funktion der Leerlaufdrehzahl (n_idleRef) des Motors umfasst.

2. Verfahren nach Anspruch 1, das ferner den Schritt umfasst:

- Ermitteln der Beziehungen als eine Gerade (f).

3. Verfahren nach einem der vorhergehenden Ansprüche, wobei das Aktivieren der zusätzlichen Last manuell durch einen Bediener bewirkt wird.

4. Verfahren nach einem der vorhergehenden Ansprüche, ferner den Schritt umfassend:

- nach Aktivieren des Regulierens, automatisches Beenden des Regulierens, wenn keine Leistungsmobilisierung (TH) vorliegt, das Regulieren über eine vorgegebene Zeitdauer stattfand und das Aktivieren der zusätzlichen Last deaktiviert wurde.

5. Verfahren nach einem der vorhergehenden Ansprüche, das ferner den Schritt umfasst:

- nach Aktivieren des Regulierens, Beenden (s470) des Regulierens, wenn eine Leistungsmobilisierung (TH) vorliegt, die die Leistungsmobilisierungsreferenz (TH_ref) wesentlich überschreitet, das Regulieren über eine vorgegebene Zeitdauer stattfand und das Aktivieren der zusätzlichen Last deaktiviert wurde.

6. Verfahren nach einem der vorhergehenden Ansprüche, das ferner den Schritt umfasst:

- Vergrößern des Sollwerts (N_init) der Motordrehzahl, wenn eine Leistungsmobilisierung, die die Leistungsmobilisierungsreferenz (TH_ref) überschreitet, über eine vorgegebene Zeitdauer angefordert wurde.

7. Vorrichtung zum Regulieren der Drehzahl eines Motors in Reaktion auf zusätzliche Last, wobei der Motor dazu eingerichtet ist, einen Nebenantrieb anzutreiben, der dem Motor eine zusätzliche Last hinzufügt, während Antriebskraft auf mindestens ein Paar Antriebsräder durch ein Getriebe übertragen wird, wobei die Vorrichtung ferner umfasst:

- Mittel (240; 200; 210; 500) zum kontinuierlichen Ermitteln einer aktuellen Drehzahl (n) des Motors,

**gekennzeichnet durch**

- Mittel (200; 210; 500) zum Ermitteln, nachdem eine zusätzliche Last aktiviert wurde, eines maximal zulässigen Sollwerts (n_init) der Motordrehzahl und einer entsprechenden Leistungsmobilisierungsreferenz (TH_ref), um die Drehzahl (n) zu regulieren,

- Mittel (200; 210; 500) zum Regulieren der Drehzahl (n) hin zum maximal zulässigen Sollwert (n_init; n_refMax), wenn eine höhere Leistungsmobilisierung (TH) als die Leistungsmobilisierungsreferenz (TH_ref) von einem Fahrer angefordert wird, und

- Mittel (200; 210; 500) zum Regulieren der Drehzahl (n) entsprechend einer bestimmten Beziehung zwischen Motordrehzahlsollwert (n_ref) und Leistungsmobilisierung (TH), wenn die Leistungsmobilisierung (TH), die vom Fahrer angefordert wird, geringer ist als die Leistungsmobilisierungsreferenz (TH_ref), wobei die Vorrichtung ferner Mittel (200; 210; 500) zum Ermitteln der Beziehung als eine Funktion der Leerlaufdrehzahl (n_idleRef) des Motors umfasst.

8. Vorrichtung nach Anspruch 7, die ferner umfasst

- Mittel (200; 210; 500) zum Ermitteln der Beziehung als eine Gerade (f).

9. Vorrichtung nach einem der Ansprüche 7-8, die ferner Mittel zum manuellen Aktivieren der zusätzlichen Last umfasst.

10. Vorrichtung nach einem der Ansprüche 7-9, ferner umfassend

- Mittel (200; 210; 500) zum automatischen Beenden des Regulierens, wenn keine Leistungsmobilisierung (TH) vorliegt, das Regulieren über eine vorgegebene Zeitdauer stattfand und das Aktivieren der zusätzlichen Last deaktiviert wurde.

**11.** Vorrichtung nach einem der Ansprüche 7-10, ferner umfassend

- Mittel (200; 210; 500) zum Beenden des Regulierens, wenn eine Leistungsmobilisierung (TH) vorliegt, die die Leistungsmobilisierungsreferenz (TH_ref) wesentlich überschreitet, das Regulieren über eine vorgegebene Zeitdauer stattfand und das Aktivieren der zusätzlichen Last deaktiviert wurde.

**12.** Vorrichtung nach einem der Ansprüche 7-11, ferner umfassend

- Mittel (200; 210; 500) zum Vergrößern des Sollwerts (N_init) der Motordrehzahl, wenn eine Leistungsmobilisierung, die die Leistungsmobilisierungsreferenz (TH_ref) überschreitet, über eine vorgegebene Zeitdauer angefordert wurde.

**13.** Kraftfahrzeug (100; 110) umfassend eine Vorrichtung nach einem der Ansprüche 7-12.

**14.** Kraftfahrzeug (100; 110) nach Anspruch 13, wobei das Fahrzeug ein Lastwagen, ein Bus oder ein Auto ist.

**15.** Computerprogramm (P) zum Regulieren der Drehzahl eines Motors in Reaktion auf zusätzliche Last, wobei das Programm (P) Programmcode umfasst, der auf einem computerlesbaren Medium gespeichert ist, und dazu eingerichtet ist, eine elektronische Steuereinheit (200; 500) oder einen anderen Computer (210; 500), der mit der elektronischen Steuereinheit (200; 500) verbunden ist, dazu zu veranlassen, die Schritte nach einem der Ansprüche 1-6 durchzuführen.

**16.** Computerprogrammprodukt umfassend Programmcode, der auf einem computerlesbaren Medium gespeichert ist, um Verfahrensschritte nach einem der Ansprüche 1-6 durchzuführen, wenn das Computerprogramm auf einer elektronischen Steuereinheit (200; 500) oder einem anderen Computer (210; 500) ausgeführt wird, der mit der elektronischen Steuereinheit (200; 500) verbunden ist.

**Revendications**

**1.** Procédé pour réguler la vitesse d'un moteur (230) en réponse à une charge supplémentaire, le moteur étant adapté à entraîner une prise de puissance qui peut ajouter une charge supplémentaire au moteur alors qu'une force de propulsion est délivrée à au moins une paire de roues motrices au moyen d'une transmission, comprenant l'étape de :

- déterminer continument (s410) une vitesse (n) dudit moteur qui prévaut,

**caractérisé par** les étapes de :

- déterminer (s430), lors de l'activation d'une charge supplémentaire provenant de la prise de puissance (s420), une valeur de point de consigne d'une vitesse de moteur maximale admissible (n_init) et une référence de mobilisation de puissance (TH_ref) correspondante, pour la régulation de ladite vitesse (n),
- réguler (s450) ladite vitesse (n) vers ladite valeur de point de consigne maximale admissible (n_init ; n_refMax) lorsqu'un conducteur demande une mobilisation de puissance (TH) plus élevée que ladite référence de mobilisation de puissance (TH_ref), et
- réguler (s450) ladite vitesse (n) conformément à une relation spécifique entre mobilisation de puissance (TH) et valeur de point de consigne de vitesse de moteur (n_ref) lorsque la mobilisation de puissance (TH) demandée par le conducteur est inférieure à ladite référence de mobilisation de puissance (TH_ref), le procédé comprenant de plus l'étape de détermination de ladite relation en fonction de la vitesse de ralenti (n_idleRef) du moteur.

**2.** Procédé selon la revendication 1, comprenant de plus l'étape de :

- déterminer ladite relation sous la forme d'une ligne droite (f).

**3.** Procédé selon l'une quelconque des revendications précédentes, dans lequel ladite activation d'une charge supplémentaire est effectuée manuellement par un opérateur.

**4.** Procédé selon l'une quelconque des revendications précédentes, comprenant de plus l'étape de :

- après l'activation de ladite régulation, arrêter automatiquement ladite régulation lorsqu'il n'y a pas de mobilisation de puissance (TH), ladite régulation ayant eu lieu pendant un laps de temps prédéterminé, et ladite activation d'une charge supplémentaire ayant été désactivée.

**5.** Procédé selon l'une quelconque des revendications précédentes, comprenant de plus l'étape de :

- après l'activation de ladite régulation, arrêter (s470) ladite régulation lorsqu'il y a une mobilisation de puissance (TH) qui dépasse substantiellement ladite référence de mobilisation de puissance (TH_ref), ladite régulation ayant eu lieu pendant un laps de temps prédéterminé, et ladite activation d'une charge supplémentaire ayant été désactivée.

6. Procédé selon l'une quelconque des revendications précédentes, comprenant de plus l'étape de :

   - augmenter ladite valeur de point de consigne de vitesse de moteur (n_init) lorsqu'une mobilisation de puissance qui dépasse ladite référence de mobilisation de puissance (TH_ref) a été demandée pendant un laps de temps prédéterminé.

7. Dispositif pour réguler la vitesse d'un moteur en réponse à une charge supplémentaire, le moteur étant adapté à entraîner une prise de puissance qui peut ajouter une charge supplémentaire au moteur alors qu'une force de propulsion est délivrée à au moins une paire de roues motrices au moyen d'une transmission, le dispositif comprenant :

   - des moyens (240 ; 200 ; 210 ; 500) pour déterminer continument une vitesse (n) dudit moteur qui prévaut,

   **caractérisé par** :

   - des moyens (200 ; 210 ; 500) pour déterminer, lors de l'activation d'une charge supplémentaire, une valeur de point de consigne de vitesse de moteur maximale admissible (n_init) et une référence de mobilisation de puissance (TH_ref) correspondante, pour la régulation de ladite vitesse (n),
   - des moyens (200 ; 210 ; 500) pour réguler ladite vitesse (n) vers ladite valeur de point de consigne maximale admissible (n_init ; n_refMax) lorsqu'un conducteur demande une mobilisation de puissance (TH) plus élevée que ladite référence de mobilisation de puissance (TH_ref), et
   - des moyens (200 ; 210 ; 500) pour réguler ladite vitesse (n) conformément à une relation spécifique entre mobilisation de puissance (TH) et valeur de point de consigne de vitesse de moteur (n_ref) lorsque la mobilisation de puissance (TH) demandée par le conducteur est inférieure à ladite référence de mobilisation de puissance (TH_ref), le dispositif comprenant de plus des moyens (200 ; 210 ; 500) pour déterminer ladite relation en fonction de la vitesse de ralenti (n_idleRef) du moteur.

8. Dispositif selon la revendication 7, comprenant de plus :

   - des moyens (200 ; 210 ; 500) pour déterminer ladite relation sous la forme d'une ligne droite (f).

9. Dispositif selon l'une quelconque des revendications 7 à 8, comprenant de plus des moyens pour activer manuellement ladite charge supplémentaire.

10. Dispositif selon l'une quelconque des revendications 7 à 9, comprenant de plus :

    - des moyens (200 ; 210 ; 500) pour arrêter automatiquement ladite régulation lorsqu'il n'y a pas de mobilisation de puissance (TH), ladite régulation ayant eu lieu pendant un laps de temps prédéterminé, et ladite activation d'une charge supplémentaire ayant été désactivée.

11. Dispositif selon l'une quelconque des revendications 7 à 10, comprenant de plus :

    - des moyens (200 ; 210 ; 500) pour arrêter ladite régulation lorsqu'il y a une mobilisation de puissance (TH) qui dépasse substantiellement ladite référence de mobilisation de puissance (TH_ref), ladite régulation ayant eu lieu pendant un laps de temps prédéterminé, et ladite activation d'une charge supplémentaire ayant été désactivée.

12. Dispositif selon l'une quelconque des revendications 7 à 11, comprenant de plus :

    - des moyens (200 ; 210 ; 500) pour augmenter ladite valeur de point de consigne de vitesse de moteur (n_init) lorsqu'une mobilisation de puissance qui dépasse ladite référence de mobilisation de puissance (TH_ref) a été demandée au cours d'un laps de temps prédéterminé.

13. Véhicule à moteur (100 ; 110) muni d'un dispositif selon l'une quelconque des revendications 7 à 12.

14. Véhicule à moteur (100 ; 110) selon la revendication 13, ce véhicule étant l'un quelconque parmi un camion, un autobus ou une voiture.

15. Programme informatique (P) pour réguler la vitesse d'un moteur en réponse à une charge supplémentaire, ce programme (P) comprenant un code de programme mémorisé sur un support lisible par ordinateur pour faire exécuter par une unité de commande électronique (200 ; 500) ou un autre ordinateur (210 ; 500) connecté à l'unité de commande électronique (200 ; 500) des étapes selon l'une quelconque des revendications 1 à 6.

16. Produit de programme informatique comprenant un code de programme mémorisé sur un support lisible par ordinateur pour exécuter des étapes de procédé selon l'une quelconque des revendications 1 à 6 lorsque ledit programme informatique est exécuté sur une unité de commande électronique (200 ; 500) ou un autre ordinateur (210 ; 500) connecté à l'unité de commande électronique (200 ; 500).

Fig. 1

Fig. 2

Fig. 3

Start

Regulate engine
speed in response
to extra load — s401

End

## Fig. 4a

Start

Determine prevailing
speed of said engine — s410

Detect activation of extra
load — s420

Determine engine speed
set-point value and
corresponding power
mobilisation reference — s430

Determine power
mobilisation demanded — s440

No

State
fulfilled?

s460

Regulate engine speed — s450

Yes

Cease regulation — s470

End

## Fig. 4b

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1544440 A1